Europäisches Patentamt

(19) European Patent Office

Office européen des brevets

(11) Publication number: **0 386 053 B1**

# EUROPEAN PATENT SPECIFICATION

(45) Date of publication of patent specification: **12.01.94** (51) Int. Cl.5: **C08B 37/10, A61K 31/725**

(21) Application number: **88909474.4**

(22) Date of filing: **27.10.88**

(86) International application number:
**PCT/EP88/00967**

(87) International publication number:
**WO 89/04328 (18.05.89 89/11)**

(54) **NON-ANTICOAGULANT HEPARAN SULFATE, PROCESS FOR EXTRACTION FROM ORGANS, AND PHARMACEUTICAL COMPOSITIONS THEREOF.**

(30) Priority: **06.11.87 IT 2254487**

(43) Date of publication of application:
**12.09.90 Bulletin 90/37**

(45) Publication of the grant of the patent:
**12.01.94 Bulletin 94/02**

(84) Designated Contracting States:
**AT BE CH DE FR GB IT LI LU NL SE**

(56) References cited:
**EP-A- 0 199 033**

**Chemisches Zentralblatt, section F, No.18, 1968, Berlin ; Z. Roubal : "Herstellung von Heparin und Hepariden", abstract no. 1703, p. 210**

**Arzmittel Forschung, vol 33, no 1, 1983, (Aulendorf, DE) ; B. Casu et al. : "Correlation between structure, fat-clearing and anticoagulant properties of heparins and heparan sulfates", pp. 135-142**

(73) Proprietor: **OPOCRIN S.p.A. LABORATORIO FARMACOBIOLOGICO**
**Via Pacinotti 3**
**I-41040 Corlo (Modena)(IT)**

(72) Inventor: **MASCELLANI, Giuseppe**
**Via Pacinotti, 3**
**I-41040 Corlo(IT)**
Inventor: **BIANCHINI, Pietro**
**Via Pacinotti, 3**
**I-41040 Corlo(IT)**

(74) Representative: **Minoja, Fabrizio**
**Studio Consulenza Brevettuale**
**Via Rossini, 8**
**I-20122 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 386 053 B1

## Description

The present invention relates to a novel heparan sulfate (HS) having high antithrombotic activity, high bio-availability, no anticoagulant activity; to a process for the extraction thereof from organs and tissues and to the relating pharmaceutical compositions.

Heparan sulfate has a hybrid structure which could be represented by an average recurrent unity, which is intermediate between the acetylated disaccharide: (1→ 4)-O-(2-acetamido-2-deoxy-$\alpha$-D-glucopyranosyl)-(1→4)-0-($\beta$-D-glucopyranosyl uronic acid) and the trisulfated disaccharide: -(1→4)-0-(2-deoxy-2-sulfamino-$\alpha$-D-glucopyranosyl-6-sulfate)-(1→4)-O-($\alpha$-L-idopyranosyl uronic acid-2-sulfate).

However, the sequence in which said disaccharides are bound, as well as the existence of successions of particularly functionalized disaccharides, able to selectively interact with biologically important factors, are not known.

Nevertheless, some variability in the composition of heparans from different organs and tissues seems to exist.

All the up to now described heparan sulfates, extracted from mucosa, lung, aorta, myocardium, liver, are characterized in having a sulfur content higher than 6.5%, equal to a $-SO_3^-/COO^-$ ratio higher than 1, corresponding to an uronic acids/hexosamines/$-SO_3^-$ molar ratio = 1/1>1.

Heparan sulfate, being mainly situated on cellular and parietal membranes, plays a physiological role of paramount importance. Reticuloendothelial system, under normal conditions, is rich in receptors carrying heparan sulfate which, due to the its electric charges, markedly contributes to the preservation of superficial electronegative potential. As long as said electronegative charge condition lasts, any thrombogenesis phenomenon is prevented (Sawyer P.N. et al., "7th Europ. Conf. on Microcirculation", Karger, Basel 1973). Moreover, complex interaction mechanisms between endogenous heparanic structures and hexogenous and endogenous heparinic structures have been evidenced at the parietal level (Dawes J. and Witt J., "Heparin: New Biochemical and Medical aspects", W. DeGruyter and Co., Berlin 1982 p.45). Said mechanisms consist in the possibility that endogenous or hexogenous circulating glucosaminoglycans preserve parietal glucosaminoglycans, by means of a mainly competitive mechanism, preventing LDL, $PF_4$ and other atherogenic or thrombogenic proteins from depositing therein, or favouring the remotion of said proteins or causing the transformation thereof through the activation of lipolytic enzymes, which are latent on parietal heparanic structures. Endothelial wall is thereby kept "clean". Thus, a natural heparan sulfate, administered for therapeutical or prophylactic purposes, should have an undoubted pharmacologic value, since it can take part in the above mentioned mechanism.

Recently, heparan sulfate has been proposed as a fibrinolytic antithrombotic, due to its therapeutic power, especially to its well-known poor anticoagulant activity. Prolonged use of this kind of drugs is allowed only provided they have poor or no anticoagulant activity as well as poor or no bleeding effect.

Antithrombotic activity of the up to now characterized heparan sulfates has always been related to residual anticoagulant activity, which in its turn always proved to depend on the antithrombin III (AT III) affinity (Hubbard A.R. et al., Thromb. Res., 35, 567, 1984).

The pattern of the different activities of heparan sulfates was compared with heparin activities: a structure-activity relationship was always evidenced, in which a closer structural likeness to heparin was connected with a higher pharmacological activity and a higher $-SO_3^-$ group content corresponded to a more marked lipasemic activity (Casu B. et al. Arzneim. Forsch., 33, I, 135, 1983), to a higher anticoagulant activity (Fransson L.A. et al., Em. J. Biochem., 106, 59, 1980) and to an increased uptake by endothelial cells (Barzu T. et al., Nouv. Rev. Hémat., 26 243, 1984).

All the heparans hitherto described have a high sulfur average content, since the uronic acids/hexosamines/$-SO_3^{\leq}$ molar ratio can range from 1/1/1 up to 1/1/1.9 (Johnson E.A., Thromb. Res., 35, 583, 1984) or from 1/1/1 up to 1/1/2 (Casu B. et al., Arzneim. Forsch., 33, 1, 140, 1983).

EP-A-0.097.625 discloses a process for the extraction of heparan sulfate (HS) from bovine mucosa, which process consists in fractional precipitations of glycosaminoglycans with salts and purification of HS with chondroitinase ABC, to remove chondroitin sulfates and dermatan sulfate which are always present with heparan sulfate. Availability of pure chondroitinase ABC is an important problem, all the more on industrial scale. Therefore, purification of heparan sulfate by means of chondroitinase ABC is practically impossible.

EP-A-0.199.033 discloses a process for the extraction of HS from aorta and myocardium, through the following steps: micronization, cell lysis with high salt concentrations, ultrafiltration, remotion of nucleic acids with activated earths, precipitation with solvents, purification on cationic resins, fractional precipitation of dermatan sulfate and heparan sulfate in form of calcium salts, purification and transformation of HS into sodium salt. The obtained product has the following characteristics: Molecular weight in the range 5:30KDa, sulfation degree: $-SO_3^-$/hexosamines = 1.2/1, iduronic acid = 30-40%, electrophoresis: Rf 1.9-1.96, according to Cappelletti et al., Anal. Bioch., 99, 311, (1979). Analytic indications do not define biunivocally an heparane sulfate. The used electrophoretic system does not distinguish between HS and fast heparin, neither specific rotations are reported.

The process according to the invention relates to the extraction of heparan sulfate from bovine spleen, pancreas, kidney and from other organs and tissues.

The process consists in the following operations:

- grinding the organs
- enzymatic treatment with proteolytic enzymes (papain, alcalase®, superase®)
- filtration
- concentration of the filtrate by reverse osmosis, followed by percolation on a macroporous strong anion exchange resin, in form of Cl⁻ or acetate or OH⁻ (such as Lewatit MP 500A, or Amberlite IRA 904). Heparan sulfate is eluted from the resin with a 0.7 - 0.9 M sodium chloride solution.
- treatment of the eluate from the column with solvents such as methanol, ethanol or acetone, to precipitate a surprisingly pure product. Alternatively, the reverse osmosis concentrated solution is treated with 30% ammonium sulfate. The protein precipitate is filtered off.
- dilution of the filtrate 1→5 with water and treatment with a quaternary ammonium salt, such as benzetonium chloride or cetrimonium bromide.
- decomplexation of the obtained precipitate with a sodium chloride solution of appropriate molarity, from which polysaccharides are precipitated with water miscible solvents, such as alcohols or acetone.
- purification of the polysaccharide mixture on a macroporous strong basic resin, from which HS is obtained in pure form by elution with a sodium chloride solution of molarity 0.5 to 0.9, or on a macroporous weak basic resin from which HS is eluted with a $0.15 \div 0.3$ M sodium chloride solution.

The obtained product has the following characteristics:

$$[\alpha]_D^{20°}$$

$= \geq +70$ on dry matter

$-SO_3^- / COO^- \leq 1$;

N-sulfation abundance $= N\text{-}SO_3^- / (N\text{-}SO_3^- + N\text{-}Ac) \leq 0.5$ (calculated for $^{13}$C-NMR);

0-sulfation abundance in $C_6$ of aminosugar:

$$C_6 - OSO_3^- / (C_6 - OSO_3^- + C_6 - OH) \leq 0.3;$$

2-0-sulfated iduronic acid abundance $= C_2\text{-}OSO_3^- / \text{Total uronic acids} \leq 0.2$;

Average Molecular Weight comprised from 15 to 30 KDa (determinated by HPLC);

Anti-factor Xa activity $\leq 3$ U/mg;

Anticoagulant activity $= 0$ U.I./ mg. Absent.

APTT $\leq 0.5$ U/mg.

The compound of the invention surprisingly displays antithrombotic activity higher or equal to that of heparin in all the experimental thrombosis patterns.

The present invention also applies to all the industrial aspects related to the use of the products obtained by the process of the invention in human therapy, as antithrombotic and fibrinolytic agents, with poor or no anticoagulant activity; to this purpose, the compounds of the invention are formulated with conventional techniques and excipients, in pharmaceutical compositions suited for oral and parenteral administration.

Examples of formulations for parenteral administration are sterile solutions in vials. Examples of formulations for oral administration are capsules, tablets, syrups, in which the active ingredient can optionally be vehiculated in form of liposomes or micells. Examples of topical formulations are ointments and creams comprising the conventional excipients.

The following examples illustrate in more detail the invention.

## EXAMPLE 1

1.1    2700 kg of bovine spleen were ground, introduced into a reactor with 2100 l of water, heated to 60°C, added with 6.4 kg of papain 1:350 and stirred for 2 hours at 60°C, then heated for some minutes to 78°C and filtered on filter press. The filtrate was subjected to reverse osmosis on polysulfone spiral membranes with cut off 20.000. The solution was concentrated to 900 l.

1.2    25% Ammonium sulfate was added to the solution. The protein precipitate was filtered off. The filtrate was diluted 1:5 with water, added with 10 l of a 50% dimethylethyl-cetyl ammonium chloride solution. The obtained precipitate was recovered by centrifugation and immediately redissolved in 50 l of a 1.3 M sodium chloride solution, from which polysaccharides were precipitated with two volumes of methanol. The dried precipitate yielded 1.140 kg of crude product (OP 509). Discontinue electrophoresis on agarose (Bianchini et al., J. Chromat., 196, 455, 1980) evidenced: HS, dermatan sulfate and condroitin sulfate A in a 35%, 30%, 30% ratio respectively to each other.

1.3    300 g of the obtained precipitate was dissolved in 5 l of water added with 150 g of calcium chloride hydrate and 0.3 volumes of ethanol. The precipitate was filtered off. The solution was percolated on a column (∅ 8 cm, height 30 cm) of a Dowex 50 W-X8®, resin, in H+ form, the eluate was adjusted to pH 5.8, added with 300 g of sodium acetate and 2 volumes of methanol. After filtration and drying, 224 g of the OP 511 product was obtained, having the following composition:HS 45%, dermatan sulfate 22%, chondroitin sulfate 33%.

1.4.    The all powder was redissolved in 3 l of water and percolated on a column of Lewatit MP 500 A® resin (in acetate form, ∅ 10 cm,h 100 cm). The column was washed with water and HS was eluted with 1 volume of a 0.7 M sodium chloride solution. The eluate was added with 20 l of methanol, HS precipitated which was recovered and dried. 100 g of a highly pure product was obtained, having the following characteristics:

$$[\alpha]_D^{20°}$$

= +72°, Sulfur 5.05%, uronic Acids = 31%, $-SO_3^-/-COO^-$ = 0.92, In vitro activity UAPTT = 0.5 U/mg, UAXa = 1.9 U/mg. Experimental thrombosis by ligation of vena cava in the rat (Reyers S., et al., Thromb. Res., 18, 699, 1980) ED50 = 0.4 mg/kg.

## EXAMPLE 2

2.1.    50 kg of ground bovine spleen was introduced into a reactor containing 75 l of water. 1.2 kg of sodium chloride, sodium hydroxide to pH 8 and 37 g of Alcalase to 2.4 L Units were added thereto. The mixture was stirred at 50°C for 1.5 hours, then heated to 75°C for 5 minutes and filtered. The filtrate was concentrated by reverse osmosis to 25 liters. The solution was eluted on a column (∅ 10 cm, h 115 cm) of a macroporous strong basic resin Amberlite IRA 904, in form of acetate, at a rate of 2 BV/h. The column was washed with 2 volumes of water. Eluate and washings were removed, then the resin was percolated with 2 volumes of a 1.2 M sodium chloride solution at a rate of 3 BV/h, then with 20 l of water. Eluate and washings were diluted to 100 l with water and added with 100 g of benzethonium chloride. The precipitate was recovered by filtration, washed on the filter and suspended in 3 l of a 1.5 M calcium chloride solution, with stirring for 1 hour. The solution was filtered with 4% filter aid. The filtrate was treated with 2 volumes of methanol. After filtration and drying, 16.1 g of crude product was obtained.

2.2.    Said product was redissolved in 300 ml of water and percolated on a column of a cation exchange resin, then directly on a 300 ml column of Lewatit® MP 500A' (in the OH⁻ form). The eluate was discarded. The resin was percolated with 1200 ml of a 0.75 M sodium chloride solution. HS was precipitated from the solution by means of 2 volumes of methanol. After filtration and drying, 7.6 g of pure HS, coded OP 495075, was obtained, having the following characteristics:

$$[\alpha]_D^{20°}$$

= +76°, Sulfur = 4.5%, $-SO_3^-/-COO^-$ = 0.91, UAPTT = 0.5 U/mg, UAXa = 2.3 U/mg. Average molecular weight: 21 Kd. Electrophoresis on agarose gel: (J. of Chromat., 196, 455, 1980) single band.

$^{13}$C.NMR (TMS as the external reference and methanol as the inner reference with chemical shifts 51.75 ppm): $\delta$ ppm, 105 ($C_1$ glucuronic acid), 101 ($C_1$ 2-0-sulfated iduronic acid), 97.87 ($C_1$ N-acetylated glucosamine), 67.53 ($C_6$ 6-0-sulfated glucosamine), 60.93 ($C_6$ 6.OH glucosamine), 57.18 ($C_2$ N-sulfated glucosamine), 54.46 ($C_2$ N-acetylated glucosamine), 23.4 (acetyl).

EXAMPLE 3

3.1.    21.5 kg of bovine kidney was ground and placed in 25 l of water with 2.5 kg of sodium chloride and 65 g of moxatase at pH 6.3 with sodium hydroxide. The mixture was heated to 50 °C for 3.5 hours, then to 95 °C for 5 minutes. The solid part was filtered off, filtrate was diluted to 280 l with water, pH was adjusted to 8.3 with sodium hydroxide, then 600 ml of 50% cetrimonium bromide was added. Precipitate was collected and added to 3 l of a 3 M sodium chloride solution.
The mixture was filtered and the filtrate was treated with 2 volumes of methanol. After filtration and drying, 35 g of crude product was obtained.

3.2.    The crude product was dissolved in 800 ml of water, added with 8 g of zinc chloride and 40 g of filtration aid. After filtration, the filtrate was treated with 3 volumes of methanol. The precipitate was collected and dried to obtain 15.7 g of an intermediate product, which was purified as described in Example 2, point 2.2, but using a macroporous weak basic resin Amberlite IRA-93 SP® and HS was eluted in the pure form with a 0.2 M sodium chloride solution. 6.1 g of HS was obtained, having the following characteristics: Sulfur = 4.9%, $-SO_3^-/-COO^- = 0.78$ and single band on all the electrophoretic systems. ED50 = 0.54 mg/kg on venous thrombosis.

EXAMPLE 4

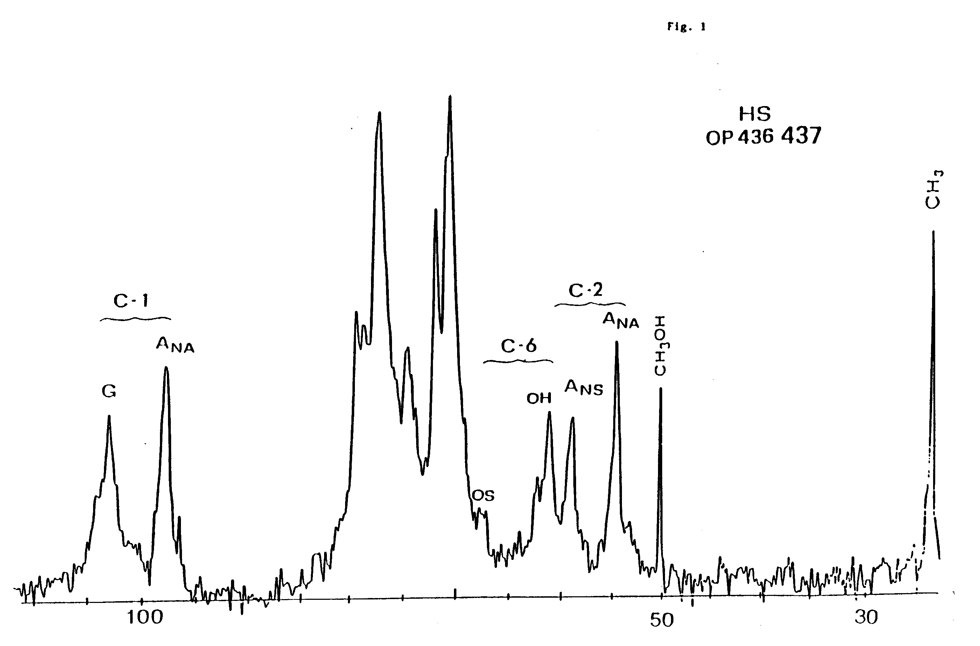

By extraction from pancreas, following a process similar to that described in Example 3, and purification on Lewatit MP 500A® resin, compound 436.437 was obtained having the following characteristics: Sulfur = 3.6%, Uronic acids = 34.9%, $-SO_3^-/-COO^- = 0.62$. Ionic band on an electrophoretic system with acid buffer (Wessler E., Anal. Bioch. 41, 67, 1971), having $R_f$ related to slow moving heparin = 0.7 and $R_f$ related to Dermatan = 0.77. 13C.NMR: see Figure 1.

Pharmacological activity

Product OP 436.437 gave the following in vitro values: UAPTT = 0.5 U/mg, UAXa = 3 U/mg (by chromogenic method), U.I. = 1 U/mg. In venous thrombosis in vivo in the rat (according to Reyers S. et al., Throm. Res., 18, 699, 1980), ED50 = 0.3 mg/kg intravenously (i.v.). In venous thrombosis induced by prothrombin concentrated complex (PCC) on rabbit jugular (Fareed J. et al. "Seminars in Throm. Haemost., 11, 2, 155, 1985) ED50 = 0.053 mg/kg i.v. and ED50 = 0.50 mg/kg subcutaneous (s.c.). 2123.3M Heparin respectively had ED50 = 0.055 mg/kg i.v. and ED50 $\gg$ 1 mg/kg s.c. In the venous thrombosis pattern induced by PCC and Russel viper venom (RVV) in the rabbit the following activities were obtained: ED50 = 0.069 mg/kg iv. and ED50 = 0.7 mg/kg s.c. In the same experimental thrombosis pattern, heparin has ED50 = 0.05 mg/kg i.v. and ED50 = 1.1 mg/kg s.c., respectively. HS obtained according to the present process proved to be surprisingly active on thrombosis patterns induced by thrombogenic agents such as prothrombin complex (PCC) and phospholipase A obtained from RVV, which give raise to thrombin and respectively act on coagulation and platelet aggregation. Since HS turned out to be $4.2 \times 10^3$ times less active than heparin on thrombin and $2.8 \times 10^3$ times less active than heparin and $1.5 \times 10^2$ times less active than dermatan sulfate on heparin cofactor II (HCII), it should be assumed that HS acts by means of an hitherto unknown and surprising mechanism.

**Claims**

1.   A process for the preparation of pure heparan sulfate from animal organs and tissues, which process consists of the following essential steps:
- grinding the organs
- enzymatic treatment with proteolytic enzymes
- filtration
- concentration of the filtrate by reverse osmosis, followed by percolation on a macroporous strong anion exchange resin and subsequent elution of heparan sulfate from the resin with a 0.7 - 0.9 M sodium chloride solution;

- treatment of the eluate from the column with solvents to precipitate a pure product; alternatively, the reverse osmosis concentrated solution is treated with 30% ammonium sulfate, the protein precipitate is filtered off;
- dilution of the filtrate 1 ---> 5 with water and treatment with a quaternary ammonium salt;
- decomplexation of the obtained precipitate with a sodium chloride solution of appropriate molarity, from which polysaccharides are precipitated with water-miscible solvents;
- purification of the polysaccharide mixture on a macroporous strong basic resin, from which HS is obtained in pure form by elution with a sodium chloride solution of molarity 0.5 to 0.9, or on a macroporous weak basic resin from which HS is eluted with a 0.15 - 0.3 M sodium chloride solution.

2.  A process according to claim 1, in which the membranes for reverse osmosis have approximately a 20,000 Da molecular weight cut-off.

3.  A process according to claim 1, in which heparan sulfate is purified from polysaccharide mixture on a macroporous strong basic resin, from which HS is obtained in pure form by elution with a sodium chloride solution of molarity 0.5 to 0.9, or on a macroporous weak basic resin from which HS is eluted with a 0.15 ÷ 0.3 M sodium chloride solution.

4.  Pure heparan sulfate obtained according to claims 1 to 3, which heparan sulfate has the following characteristics:

$$[\alpha]_D^{20°}$$

$= \geq +70°$ on dry matter;

sulfate to carboxyl groups ratio: $-SO_3^- / COO^- \leq 1$;

N-sulfation abundance $= N\text{-}SO_3^- / (N\text{-}SO_3^- + N\text{-}Ac) \leq 0.5$;

O-sulfation abundance in $C_6$ of aminosugar:

$$C_6 - OSO_3^- / (C_6 - OSO_3^- + C_6 - OH) \leq 0.3;$$

2-O-sulfated iduronic acid abundance $= C_2\text{-}OSO_3^- / $ Total uronic acids $\leq 0.2$;

average molecular weight $= 15 \div 30$ KDa;

anti-factor Xa activity $\leq 3$ U/mg;

anticoagulant activity $= O$ I.U./mg - absent;

APTT activity $\leq 0.5$ U/mg;

antithrombotic activity higher or equal to that of heparin.

5.  Pharmaceutical compositions for oral, parenteral and topical administration, containing heparan sulfate obtained according to claims 1 to 3.

**Patentansprüche**

1.  Verfahren zur Herstellung von reinem Heparansulfat aus tierischen Organen und Geweben, das aus den folgenden wesentlichen Stufen besteht:
    - Mahlen (Zerkleinern) der Organe,
    - enzymatisches Behandeln mit proteolytischen Enzymen,
    - Filtrieren,
    - Konzentrieren des Filtrats durch Umkehrosmose und anschließendes Perkolieren an einem makroporösen starken Anionenaustauscherharz und nachfolgendes Eluieren des Heparansulfats aus dem Harz mit einer 0,7 bis 0,9 M Natriumchloridlösung,
    - Behandeln des Eluats aus der Säule mit Lösungsmitteln, um ein reines Produkt auszufällen; wobei alternativ die durch Umkehrosmose konzentrierte Lösung mit 30 % Ammoniumsulfat behandelt und das Protein-Präzipitat abfiltriert wird;

- Verdünnen des Filtrats 1 → 5 mit Wasser und Behandeln mit einem quaternären Ammoniumsalz;
- Dekomplexieren des erhaltenen Präzipitats mit einer Natriumchlorid-Lösung geeigneter Molarität, aus der Polysaccharide ausgefällt werden mit mit Wasser mischbaren Lösungsmitteln;
- Reinigen der Polysaccharid-Mischung an einem makroporösen stark basischen Harz, aus dem durch Elution mit einer 0,5 bis 0,9 molaren Natriumchloridlösung HS in reiner Form erhalten wird, oder an einem makroporösen schwach basischen Harz, aus dem HS mit einer 0,15 bis 0,3 M Natriumchloridlösung eluiert wird.

**2.** Verfahren nach Anspruch 1, bei dem die Membranen für die Umkehrosmose einen Molekulargewichts-Schnitt von etwa 20 000 Da aufweisen.

**3.** Verfahren nach Anspruch 1, bei dem Heparansulfat aus der Polysaccharidmischung gereinigt wird an einem makroporösen stark basischen Harz, aus dem HS in reiner Form erhalten wird durch Elution mit einer 0,5 bis 0,9 molaren Natriumchloridlösung, oder an einem makroporösen schwach basischen Harz, aus dem HS mit einer 0,15 bis 0,3 M Natriumchloridlösung eluiert wird.

**4.** Reines Heparansulfat wie es nach den Ansprüchen 1 bis 3 erhalten wird, das die folgenden Eigenschaften aufweist:

$[\alpha]{:}_D^{20°} = \geq +70°$, bezogen auf das trockene Material;

Sulfatgruppen/Carboxylgruppen-Verhältnis: $-SO_3^-/COO^- \leq 1$;

N-Sulfat-Ionen-Gehalt (Menge) $= N-SO_3^-/(N-SO_3^- + N-Ac) \leq 0,5$;

O-Sulfat-Ionen-Gehalt (Menge) am $C_6$ eines Aminozuckers:

$C_6 - OSO_3^-/(C_6-OSO_3^- + C_6-OH) \leq 0,3$;

2-O-sulfatierte Iduronsäure-Gehalt (Menge) $= C_2-OSO_3^-/Gesamtmenge Uronsäuren \leq 0,2$;

durchschnittliches Molekulargewicht $= 15-30$ kDa;

Antifaktor Xa-Aktivität $\leq 3$ U/mg;

Antikoagulans-Aktivität $= 0$ I.U./mg - keine;

APTT-Aktivität $\leq 0,5$ U/mg;

antithrombotische Aktivität gleich oder höher als diejenige von Heparin.

**5.** Pharmazeutische Zusammensetzungen für die orale, parenterale und topische Verabreichung, die das in den Ansprüchen 1 bis 3 erhaltene Heparansulfat enthalten.

**Revendications**

**1.** Procédé pour la préparation de sulfate d'héparane pur à partir d'organes et de tissus animaux, qui comprend les étapes essentielles suivantes :
- broyage des organes
- traitement enzymatique avec des enzymes protéolytiques,
- filtration,
- concentration du filtrat par osmose inverse, suivie d'une percolation sur une résine macroporeuse d'échange d'anion fort et d'une élution ultérieure du sulfate d'héparane à partir de la résine avec une solution de chlorure de sodium 0,7 - 0,9 M;
- traitement de l'éluat provenant de la colonne avec des solvants pour faire précipiter un produit pur; dans une variante, la solution concentrée par osmose inverse est traitée avec du sulfate d'ammonium à 30%, le précipité de protéine est séparé par filtration;
- dilution du filtrat 1 ----> 5 avec de l'eau et le traitement avec un sel d'ammonium quaternaire;
- destruction du complexe du précipité ainsi obtenu avec une solution de chlorure de sodium de molarité appropriée, à partir de laquelle des polysaccharides sont précipités avec des solvants miscibles à l'eau;
- purification du mélange de polysaccharides sur une résine macroporeuse basique forte, à partir de laquelle le SH est obtenu sous forme pure par élution avec une solution de chlorure de sodium ayant une molarité de 0,5 à 0,9, ou sur une résine macroporeuse basique faible à partir de laquelle le SH est élué avec une solution de chlorure de sodium 0,15 à 0,3 M.

**2.** Procédé suivant la revendication 1, dans lequel les membranes utilisées pour l'osmose inverse ont une coupe de poids moléculaire d'environ 20.000 Da.

7

**3.** Procédé suivant la revendication 1, dans lequel le sulfate d'héparane est purifié à partir d'un mélange de polysaccharides sur une résine macroporeuse basique forte, à partir de laquelle le SH est obtenu sous forme pure par élution avec une solution de chlorure de sodium ayant une molarité de 0,5 à 0,9, ou sur une résine macroporeuse basique faible à partir de laquelle le SH est élué avec une solution de chlorure de sodium 0,15 à 0,3 M.

**4.** Sulfate d'héparane pur obtenu suivant les revendications 1 à 3, lequel sulfate d'héparane a les caractéristiques suivantes :

$$[\alpha]^{20}_D$$

$= \geq + 70°$ sur une matière sèche;

rapport des groupes sulfate/carboxy = $-SO_3^-/COO^- \leq 1$;

abondance de la N-sulfatation = $N\text{-}SO_3^-/(N\text{-}SO_3^- + N\text{-}Ac) \leq 0,5$;

abondance de la O-sulfatation en $C_6$ d'aminosucre :

$C_6 - OSO_3^-/(C_6 - OSO_3^- + C_6 - OH) \leq 0,3$;

abondance de l'acide iduronique 2-O-sulfaté = $C_2 - OSO_3^-$/acides uroniques totaux $\leq 0,2$;

poids moléculaire moyen = 15 à 30 kDa;

activité anti-facteur Xa $\leq 3$ U/mg;

activité anticoagulante = 0 UI/mg - absente;

activité APTT $\leq 0,5$ U/mg;

activité antithrombotique supérieure ou égale à celle de l'héparine.

**5.** Compositions pharmaceutique pour administration orale, parentérale ou topique, contenant du sulfate d'héparane obtenu suivant les revendications 1 à 3.

Fig. 1

HS
OP 436 437

C-1

A_{NA}

G

C-6

OH

A_{NS}

C-2

A_{NA}

CH_3OH

CH_3

100

50

30

EP 0 386 053 B1

9